# EUROPEAN PATENT SPECIFICATION

(11) **EP 0 390 121 B1**
(45) Date of publication and mention of the grant of the patent: **14.06.1995**
(21) Application number: 90105934.5
(22) Date of filing: 28.03.1990
(51) Int. Cl.: F16K 11/00, G05D 23/13, F16K 11/20

(54) **Mixing valve**
Mischventil
Soupape de mélange

(30) Priority: 29.03.1989 JP 79162/89
(43) Date of publication of application: 03.10.1990
(73) Proprietor: INAX CORPORATION, Tokoname-Shi Aichi (JP)
(72) Inventor: Akita, Junji, c/o Inax Corporation, Tokoname-Shi, Aichi (JP)
(74) Representative: Grünecker, Kinkeldey, Stockmair & Schwanhäusser Anwaltssozietät

(56) References cited:
- DE-A- 2 836 843
- US-A- 4 349 149
- US-A- 4 610 393

## Description

### BACKGROUND OF THE INVENTION

### Field of the Invention

This invention relates to a mixing valve and its change valve which are selectively switched to provide hot water either to a shower or to a bath.

### Description of the Prior Art

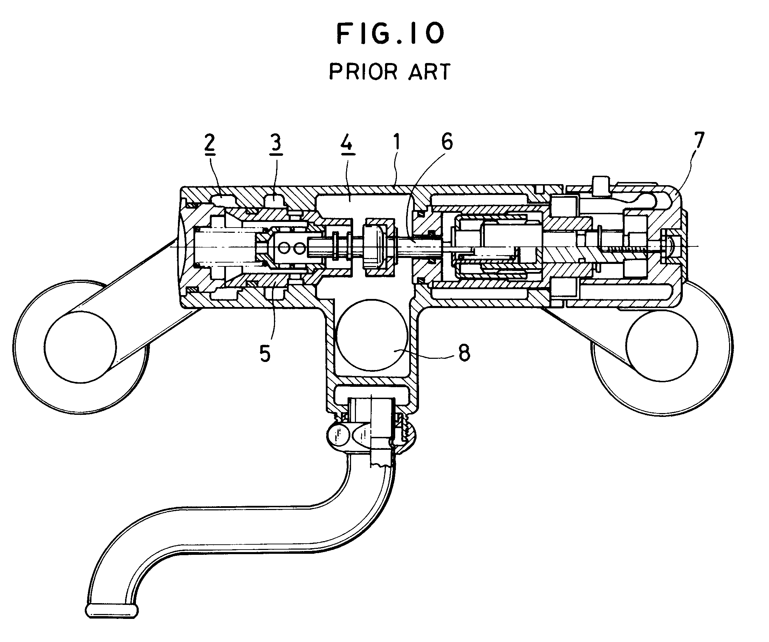

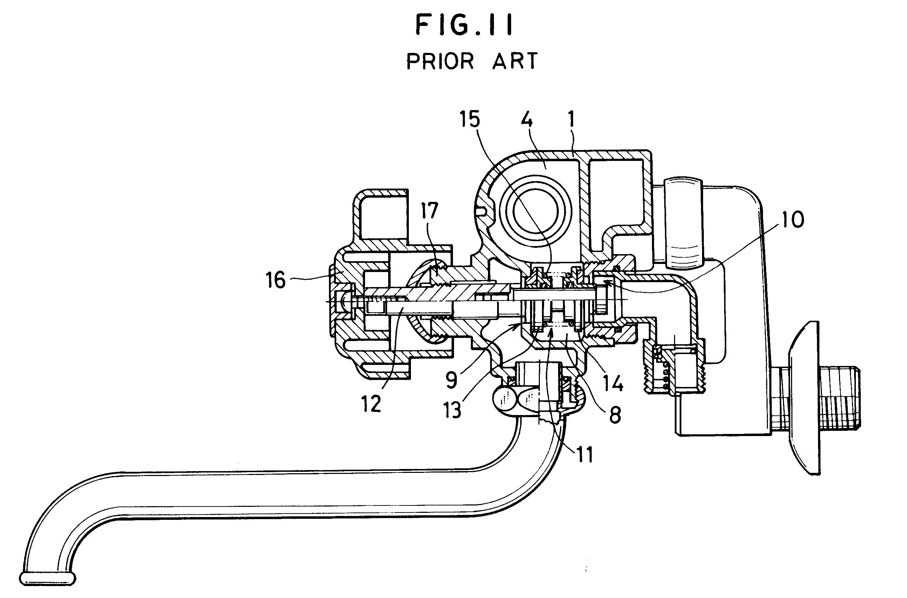

A vertical sectional front view in FIG. 10 and a vertical sectional side view in FIG. 11 show the conventional type of a mixing valve. In the valve case 1, a hot water chamber 2, a cold water chamber 3 and a mixing chamber 4 are aligned. In the part across the hot water chamber 2 and the cold water chamber 3, a temperature control valve 5 with a thermostat is arranged to obtain mixed water at a desired temperature by controlling the rate of hot water from the hot water chamber 2 and of cold water from the cold water chamber 3 into the mixing chamber 4. At the right end of this valve case 1, a thermo handle 7 is fixed to adjust the axial position of a spindle 6 in the temperature control valve and determine the temperature of hot water.

At the bottom of the mixing chamber 4, the change valve chamber for hot water 8 connected to the mixing chamber 4 is installed in projection. In this change valve chamber 8, a supply port 9 to a bath and a supply port 10 to a shower are aligned, its opening and closing being controlled by the change valve 11. The change valve 11 has valves 13 and 14 which are interfittingly attached in indent against a spindle 12, and generally the valves 13 and 14 are spaced from one another with a spring 15. When a change handle 16 is operated to turn to the right or to the left, the spindle 12 moves forward and backward (move to the right or to the left in FIG. 11) by the screw 17, thereby either valve 13 or valve 14 is operated to open, that is, change valve chamber 8 is connected to either supply port 9 to the bath or supply port 10 to the shower and hot water adjusted to a desired temperature in the mixing chamber 4 is provided to the bath or to the shower.

However, this conventional type of mixing valve has some defects : the first one is the irregular appearance of the valve case 1 through the composition that the change valve chamber 8 is formed at the central bottom of the valve case 1 in projection, the second one is the increase in height of the valve case 1, the third one is the unsymmetrical form of the valve case, where the one end of the valve 1 is equipped with the thermo handle 7 and the another end is closed, the last one is the axial enlargement of all the members composing the change valve 11 and the increase of the depth of the valve case, which result from the working space between the valve 13 and the valve 14 in the change valve 11 for close and open and the area required to move the spindle 12 forward and backward to switch, open and close the valves 13 and 14.

From DE-A-2 836 843 a mixing valve is known which discharges mixed water, whereby the mixed water is selectively provided to a shower or to a discharge tube, said mixing valve comprises:
a valve case having an inlet port of cold water, an inlet port of hot water, an outlet port of mixed water for the shower and an outlet port of mixed water for the discharge tube;
a thermo valve equipped at one end within said valve case;
a flow change valve equipped at another end within said valve case;
a change handle equipped outside of the other end of said valve case connected to the flow change valve so as to operate said flow change valve;
a mixing chamber determined between the thermo valve and the flow change valve in said valve case;
wherein mixed water, which has been mixed in the mixing chamber is provided to the outlet port of mixing water for the shower or to the outlet port of mixed water for the discharge tube by the action of said flow change valve;
It is an object of the present invention to provide a compact mixing valve which has an excellent appearance.

In order to solve this problem, the mixing valve of the present invention is characterized in that said valve case is tubular, a thermo handle is equipped outside of the one end of said valve case and connected to the thermo valve so as to operate said thermo valve, cold water from said inlet port of cold water and hot water from said inlet port of hot water being provided to the mixing chamber through the thermo valve, said flow change valve includes a tubular holder coaxially inserted into said tubular valve case and two disc valves arranged within said holder, whereby, said disc valves are interfittingly overlapping each other and the faces of said disc valves are perpendicular to the axial direction of the holder, one of said disc valves being a movable disc which is rotated by the change handle and the other of said disc valves being a fixed disc which is unrotatably supported against the holder, a chamber connected to the shower introduced to said outlet port of mixed water for the shower is provided between the outer periphery of said holder and the inner periphery of said valve case, and in that a further chamber connected to a bath introduced to said outlet port of mixed water for the discharge tube is provided, whereby the connection of the mixing chamber to the chamber connected to the shower or to the further chamber connected to the bath is performed by rotating the movable disc valve.

The sub-claims contain preferred embodiments of the present invention.

### BRIEF DESCRIPTION OF THE DRAWINGS

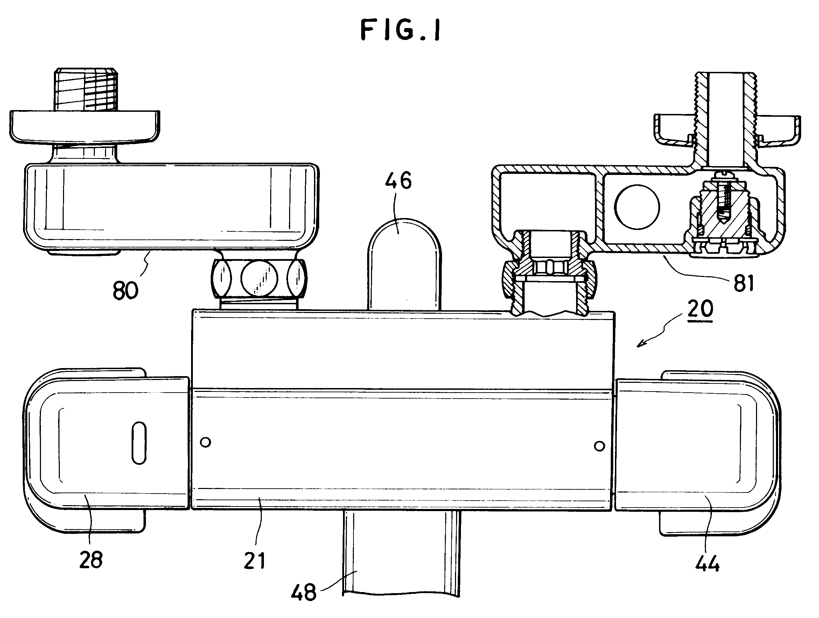

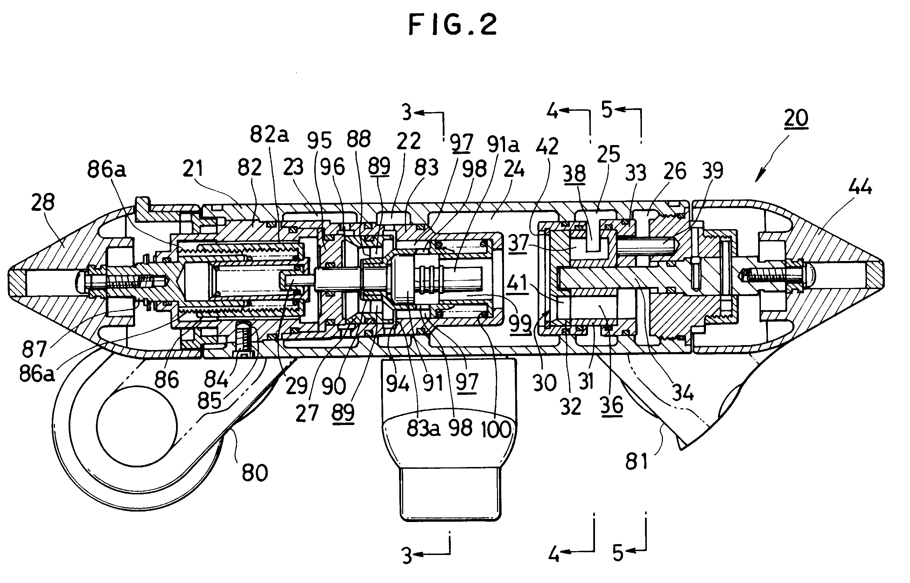

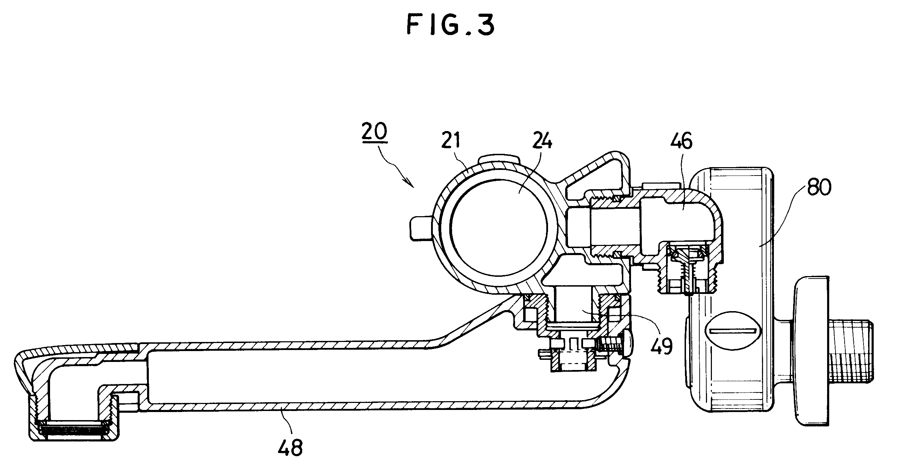

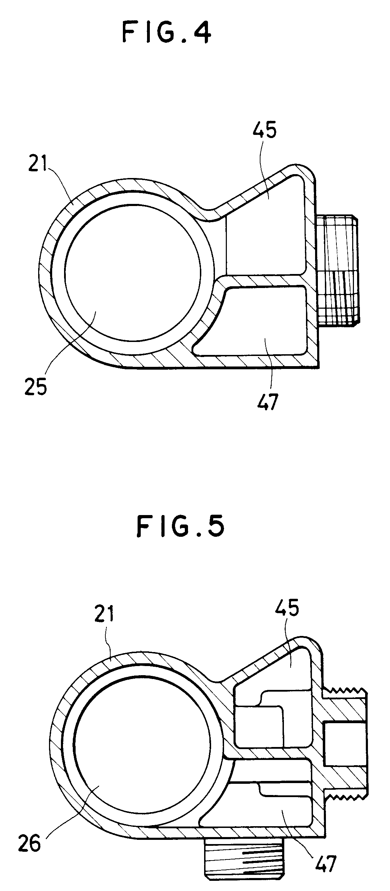

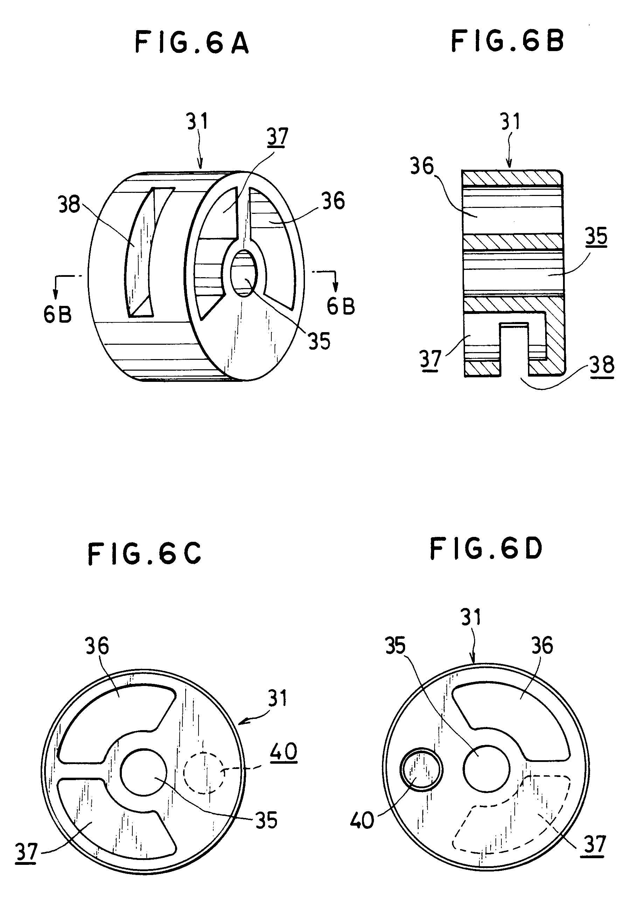

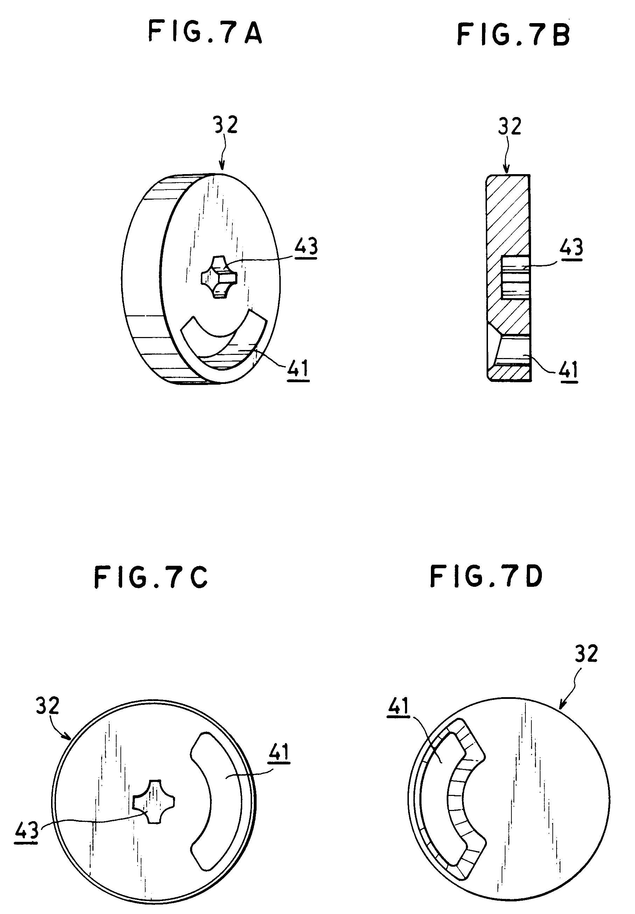

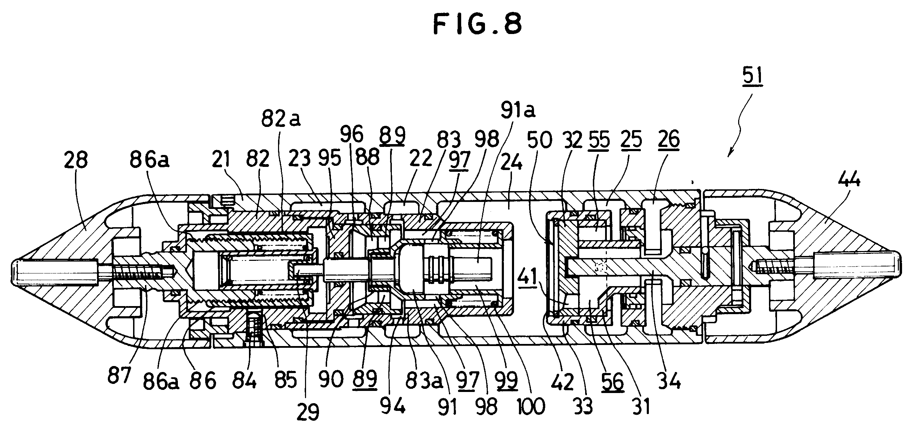

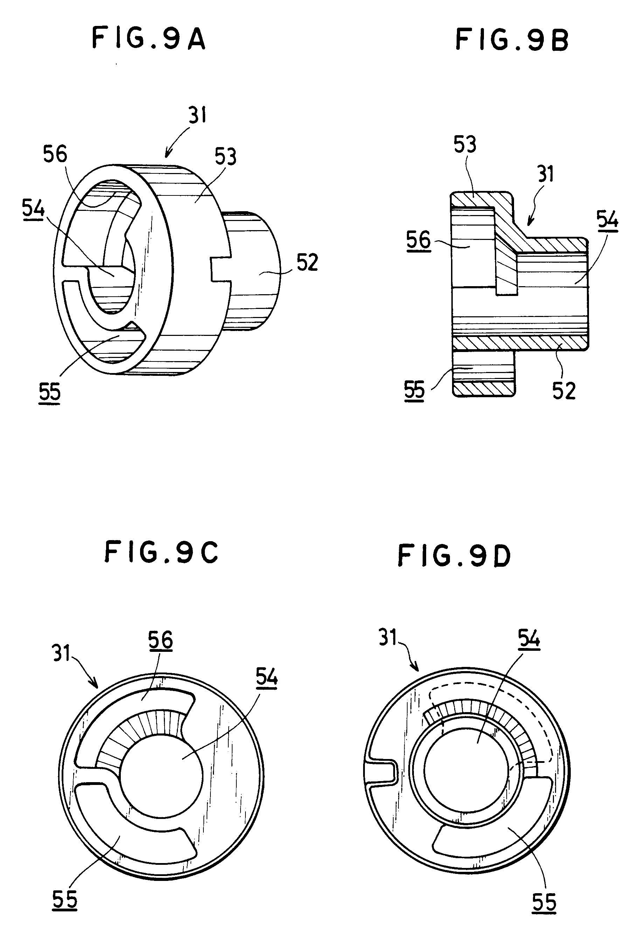

FIG. 1 to FIG. 5 illustrate an example of the mixing valve concerning this invention. FIG. 1 is a partial sectional front plan view of the mixing valve. FIG. 2 is a vertical sectional front plan view of the same. FIG. 3 is a vertical view of 3 - 3 in FIG. 2. FIG. 4 is a vertical view of 4 - 4 in FIG. 2. FIG. 5 is a vertical view of 5 - 5 in FIG. 2. FIG. 6A is an oblique view of the fixed disc valve. FIG. 6B is a vertical view of 6B-6B in FIG. 6A. FIG. 6C is a front view of the fixed disc valve. FIG. 6D is a back view of the same. FIG. 7A is an oblique view of a movable disc valve. FIG. 7B is a vertical view of 7A-7A in FIG. 7A. FIG. 7C is a front view of a movable disc valve. FIG. 7D is a back view of the same. FIG. 8 is a vertical sectional front view of another mixing valve concerning this invention. FIG. 9A is an oblique view of the fixed disc valve of the change valve. FIG. 9B is a vertial sectional view of the same. FIG. 9C is a front view of the same. FIG. 9D is a back view of the same. FIG. 10 is a vertical sectional front view of the conventional mixing valve. FIG. 11 is a vertical sectional view of the same.

### DESCRIPTION OF THE PREFFERED EMBODIMENTS

The composition of this invention is shown as follows according to the applications in the drawing.

FIG. 1 to FIG. 5 illustrate the mixing valve 20 concerning one application of this invention.

This mixing valve 20 is connected to a hot water supply leg tube 80 and to a cold water supply leg tube 81. The legs 80 and 81 are connected to a hot water supply tube and to a cold water supply tube inside the wall. In a tubular valve case 21 which - in figures 1 and 2 - extends in the right and left direction, a cold water chamber 23, a hot water chamber 22, a mixing chamber 24, a chamber 25 communicated to a shower device (not shown) and a chamber 26 communicated to a bath (not shown) via a discharge tube 48 are aligned from the left end in this order. A temperature control valve with a thermostat 27 is fixed between the hot water chamber 22 and the cold water chamber 23 to control the rate of hot water and cold water flowing into the mixing chamber 24. This temperature control valve 27 operates to turn a thermo handle 28 fixed at the left end of the valve case 21 to change the axial position of the spindle 29, thereby the valve changes the ratio of hot water to cold water to determine the temperature of the mixed water. The mechanism of this temperature control is explained as follows.

In the tubular valve case 21, 2 tubular holders are fitted and fixed.

One holder 82 is arranged at the left side of FIG. 2 and another holder 83 at the right side of holder 82. These holders 82 and 83 with a male screw and a female screw respectively are interfitted. The holder 82 on which outer periphery an indent part 85 pierces engages with the end of a stopper screw 84 screwed from the outside against the valve case 21 in the radial direction and with the indent part 85 to be fixed.

The inner periphery of the tubular shifting element 86 is notched with a female screw which engages with a male screw 86a on the outer periphery of the spindle 87.

The inner periphery of the holder 82 is notched with a serration 82a which engages with a serration on the outer periphery of the tubular shifting element 86. The spindle 87 is fixed to the handle 28.

The thermo valve 27 is movably attached in indent within the tubular holder 83 in the right and left direction in FIG. 2. A space between the valve 27 and a step part 83a of the holder 83 is used as the hot water channel 94 and that between the valve 27 and the diaphragm 95 as cold water channel 96. The hot water and cold water mixed in the part 97 in the drawings flows through the opening 98 into the chamber 99 and then into the mixing chamber 24.

The short tubular thermo valve 27 has a tubular shaft and a perpendicular plate 88 through which an opening 89 is piercing. A thermostat device 91 is fixed at the boss part 90 in the center of the plate 88. Thermo-element is enclosed inside the thermostat device 91, the thermo-element expands to project the spindle 29 when the temperature of hot water which contacts the thermo-sensing part 91a exceeds the predetermined temperature, and let the spindle 29 regress when the temperature lowers the predetermined temperature.

When projecting the spindle 29, the valve 27 moves to the right in figure 2 to narrow the hot water channel 94 between the valve 27 and the step part 83 of the holder 83 and simultaneously enlarge the cold water channel 96 between the diaphragm 95 and the valve 27. In this process, the hot water rate descreasing and the cold water rate increasing, the temperature of hot water in the mixing chamber 24 lowers.

At the other hand, when the temperature of the mixed water which contacts the thermo-sensing part 91a is lower than the predetermined temperature, the spindle 29 regresses into the thermostat-element 91, and then the spring 100 pushes the valve 27 to move to the left in FIG. 2, thereby the interval of cold water channel 96 is narrowed and simultaneously that of hot water channel 94 is enlarged to increase the temperature of the mixed water which flows from the chamber 99 into the mixing chamber 24.

Turning of thermo handle 28 rotates the spindle 87, thereby the tubular shifting element 86 shifts in the right and left direction in FIG. 2 through the engagement with the spindle 87. The shift of the tubular shifting element 66 causes the valve 27 to shift via the spindle 29. In this way, the ratio of cold water to hot water flowing into the mixing chamber 24 is determined.

At the space between the chamber 25 for a shower and the chamber 26 for a bath, the change valve 30 is equipped to supply the mixed water with the desired temperature in the mixing chamber either to the chamber 25 for a shower or to the chamber 26 for a bath. The change valve 30 including a fixed disc valve 31 as shown in FIG. 6A to FIG. 6D and a movable disc valve 32 shown in FIG.7A to FIG. 7D which are fixedly attached one another is equipped in engagement within the holder 33.

As shown in FIG. 6A to FIG. 6D, the disc valve 31 has an shaft hole 35 piercing the center thereof where the spindle 34 passes through, a first fan-shaped outlet port 36 passing through its inside, a bypass chamber 37 arranged in a fan-shaped indent halfway in the axial direction, a second outlet port 38 formed on the peripherial side which is connected to the bypass chamber. At the back of the disc valve 31 a pin hole 40 is arranged to engage with the pin 39 of the holder 33 (see FIG. 2). This engagement allows the disc valve 31 to be fixed in the holder 33.

A movable disc valve 32 includes, as shown in FIG. 7A to 7D, a fan-shaped inlet port 41 passing through its inside. This disc valve 32 which is engaged with the holder 33 is prevented to be slipped out by C-ring 42. The cross-shaped tip of the spindle 34 which is arranged passing through the fixed disc valve 31 above mentioned is inserted into the cross-shaped female hole 43 of the disc valve 32. At the right side of the valve case 21 in figure 2, a change handle 44 is installed to rotate the movable valve 32 via the spindle 34.

The chamber 25 for a shower is, as shown in FIG. 4, connected to the shower joint 46 (see FIG. 1 and 3) via the channel 45 determined at the back of the valve case 21. The chamber 26 for a bath is, as shown in FIG. 5, connected to a joint 49 of the discharge tube 48 via the channel 47 determined at the bottom of the channel 45.

Supposing now that the outlet port 41 of the movable disc valve 32 and the bypass chamber 37 of the fixed disc valve 31 are overlapped by rotating, the mixed water in the mixing chamber 24 with a desired temperature flows from the inlet port 41 of the movable disc valve 32 into the bypass chamber 37 of the fixed disc valve 31, and from the bypass chamber 37 into the chamber 25 for the shower via the outlet port 38 determined on the peripherial side and eventually from the chamber 45 into the shower joint 46. The flow rate can be naturally controlled by controlling the open space determined by the overlap with the inlet port 41 and the bypass chamber 37.

Supposing now that the inlet port 41 of the movable disc valve 32 and the outlet port 36 where the fixed disc valve 31 passes through are overlapped by rotating the change handle 44 in the opposite direction with the mentioned above. The mixed water in the mixing chamber 24 flows from the inlet port 41 of the movable disc valve 32 into the chamber connected to the chamber 26 via the outlet 36 of the fixed disc valve 31, and then into the joint 49 through the channel 47 and provided to a bath or to a wash-place from the discharge tube 48. In this case the flow rate can be controlled by controlling an open space determined by the overlap with the inlet port 41 and the outlet port 36.

Using two disc valves 31 and 32, chambers 22 to 26, thermo valve 27, thermo handle 28, change valve 30 and change handle 44 can be aligned in the valve case 21, in other words, the channel and the change valve 30 in the valve case can be aligned. This alignment allowing the height and the depth of the valve case 21 to be decreased, a compact mixing valve 20 can be provided.

FIG. 8 illustrates a mixing valve 51 using another change valve 50 of this invention. The change valve 50 has the same disc valve 32 of the change valve 30 above mentioned, but has a different appearance and port form with those of the fixed disc valve 31. That is, the fixed valve 31 of the change valve 50 has a small radial tube 52 and a large radial tube 53 as shown in FIG. 9A to FIG. 9D. An outlet port 54 having a shaft hole with larger radius than that of the spindle 34 passes through the small radial tube 52 in indent, the shaft hole is also served for the spindle 34. The insertion of the spindle 34 into the outlet port 54 determines a desired tubular clearance between the spindle 34 and the wall of the outlet port 54, the clearance serves the hot water channel. The large radial tube 53 is equipped with a fan-shaped outlet port 55 passing through the tube 53 and a fan-shaped bypass chamber 56 which is installed halfway in the axial direction of the tube 53. The bypass chamber 56 is connected to the outlet port 54 of the small radial tube 52.

Supposing now that the inlet port 41 of the movable disc valve 31 and the outlet port 55 of the fixed disc valve 32 are connected by rotating the change handle 44, the hot water adjusted to a desired temperature in the mixing chamber 24 flows from the inlet port 41 of the movable disc valve 31 into the outlet port 55 of the fixed disc valve 32 and then into the chamber 25 for shower. The mixed water in the chamber 25 is introduced into the shower joint 46 through the channel 45 illustrated in FIG. 4. Supposing now that the inlet port 41 of the movable disc 31 and the bypass chamber 56 of the fixed disc valve 32 are connected as illustrated in FIG. 8, by rotating the change handle 44 into the contrary direction. In this case, the hot water in the mixing chamber 24 flows into the chamber 26 for a bath via the inlet port 41, the bypass chamber 56 and the outlet port 54 which passes the same shaft hole with the spindle 34. Eventually the hot water flows from the joint 49 to the discharge tube 48 via the channel 47 in FIG. 5.

The another mechanism and process are the same with those of the mixing valve 20 and the same signs show the same parts.

In this invention, some transformation can be made in the dimension or the form of the mixing valves 20 and 51, the design of the thermo handle 28 and of the operating handle 44.

## Claims

1. A mixing valve (20) which discharges mixed water, whereby the mixed water is selectively provided to a shower or to a discharge tube (48), said mixing valve (20) comprises:
a valve case (21) having an inlet port of cold water, an inlet port of hot water, an outlet port of mixed water for the shower and an outlet port of mixed water for the discharge tube (48);
a thermo valve (27) equipped at one end within said valve case (21);
a flow change valve (30) equipped at another end within said valve case (21);
a change handle (44) equipped outside of the other end of said valve case (21) connected to the flow change valve (30) so as to operate said flow change valve (30);
a mixing chamber (24) determined between the thermo valve (27) and the flow change valve (30) in said valve case (21);
wherein mixed water, which has been mixed in the mixing chamber (20) is provided to the outlet port of mixing water for the shower or to the outlet port of mixed water for the discharge tube (48) by the action of said flow change valve (30);
**characterised in that**
said valve case (21) is tubular;
a thermo handle (28) is equipped outside of the one end of said valve case (21) and connected to the thermo valve (27) so as to operate said thermo valve (27);
cold water from said inlet port of cold water and hot water from said inlet port of hot water being provided to the mixing chamber (24) through the thermo valve (27);
said flow change valve (30) includes a tubular holder (33) coaxially inserted into said tubular valve case (21) and two disc valves (31, 32) arranged within said holder (33), whereby:
said disc valves (31, 32) are interfittingly overlapping each other and the faces of said disc valves (31, 32) are perpendicular to the axial direction of the holder (33),
one (32) of said disc valves being a movable disc which is rotated by the change handle (44) and the other (31) of said disc valves being a fixed disc which is unrotatably supported against the holder (33);
a chamber (25) connected to the shower introduced to said outlet port of mixed water for the shower is provided between the outer periphery of said holder (33) and the inner periphery of said valve case (21); and in that
a further chamber (26) connected to a bath introduced to said outlet port of mixed water for the discharge tube (48) is provided;
whereby the connection of the mixing chamber (24) to the chamber (25) connected to the shower or to the further chamber (26) connected to the bath is performed by rotating the movable disc valve (32).

2. The mixing valve of claim 1, wherein said one disc valve (32) has an inlet port (41) which passes through its inside in the direction parallel to the shaft core of the tubular holder (33) and said other disc valve (31) has a fan-shaped outlet port (36) which passes through its inside in the direction parallel to the shaft core on the tubular holder (33) a fan-shaped bypass chamber (37) equipped in indent from the interfitting plain with said disc valve (31) and an outlet port (38).

3. The mixing valve of claim 2, wherein said outlet port (38) is determined on the peripheral side of the disc valve (31).

## Patentansprüche

1. Mischventil (20), das gemischtes Wasser abgibt, wobei das gemischte Wasser wahlweise zu einer Dusche oder einem Auslaßrohr (48) geführt wird, wobei das Mischventil (20) aufweist:
ein Ventilgehäuse (21), das eine Einlaßdurchgangsöffnung für kaltes Wasser, eine Einlaßdurchgangsöffnung für heißes Wasser, eine Auslaßdurchgangsöffnung für gemischtes Wasser für die Dusche und eine Auslaßdurchgangsöffnung für gemischtes Wasser für das Auslaßrohr (48) besitzt;
ein Thermo-Ventil (27), das an einem Ende mit dem Ventilgehäuse (21) ausgestattet ist;
ein Strömungsumschaltventil (30), das mit einem anderen Ende innerhalb des Ventilgehäuses (21) ausgestattet ist;
einen Umschalt-Handgriff (44), der außenseitig des anderen Endes des Ventilgehäuses (21) vorgesehen ist, das mit dem Strömungsumschaltventil (30) verbunden ist, um so das Strömungsumschaltventil (30) zu betätigen;
eine Mischkammer (24), die zwischen dem Thermo-Ventil (27) und dem Strömungsumschaltventil (30) in dem Ventilgehäuse (21) festgelegt ist;
wobei gemischtes Wasser, das in der Mischkammer (20) gemischt worden ist, zu der Auslaßdurchgangsöffnung für gemischtes Wasser für die Dusche oder die Auslaßdurchgangsöffnung für gemischtes Wasser für das Auslaßrohr (48) durch die Betätigung des Strömungsumschaltventils (30) geführt wird;
dadurch gekennzeichnet, daß
das Ventilgehäuse (21) rohrförmig ist;
ein Thermo-Handgriff (28) außenseitig des einen Endes des Ventilgehäuses (21) vorgesehen ist und mit dem Thermo-Ventil (27) verbunden ist, um so das Thermo-Ventil (27) zu betätigen;
wobei kaltes Wasser von der Einlaßdurchgangsöffnung für kaltes Wasser und heißes Wasser von der Einlaßdurchgangsöffnung für heißes Wasser zu der Mischkammer (24) durch das Thermo-Ventil (27) geführt werden;
wobei das Strömungsumschaltventil (30) einen rohrförmigen Halter (33), der koaxial in das rohrförmige Ventilgehäuse (21) eingesetzt ist, und zwei Tellerventile (31, 32) umfaßt, die innerhalb des Halters (33) angeordnet sind, wobei:
die Tellerventile (31, 32) miteinander befestigt überlappend zueinander sind und die Außenflächen der Tellerventile (31, 32) senkrecht zu der axialen Richtung des Halters (33) verlaufen,
wobei eines (32) der Tellerventile eine bewegbare Scheibe ist, die durch den Umschalt-Handgriff (44) gedreht wird, und wobei das andere (31) der Tellerventile eine befestigte Scheibe ist, die nicht drehbar gegen den Halter (33) gehalten ist;
wobei eine Kammer (25), die mit der Dusche verbunden ist, die zu der Auslaßdurchgangsöffnung für gemischtes Wasser für die Dusche eingeführt wird, zwischen dem äußeren Umfang des Halters (33) und dem inneren Umfang des Ventilgehäuses (21) vorgesehen ist; und daß
eine weitere Kammer (26), die mit einem Bad verbunden ist, die zu der Auslaßdurchgangsöffnung für gemischtes Wasser für das Auslaßrohr (48) zugeführt wird, vorgesehen ist;
wobei die Verbindung der Mischkammer (24) mit der Kammer (25), die mit der Dusche verbunden ist, oder der weiteren Kammer (26), die mit dem Bad verbunden ist, durch Drehung des bewegbaren Tellerventils (32) durchgeführt wird.

2. Mischventil nach Anspruch 1, wobei das eine Tellerventil (32) eine Einlaßdurchgangsöffnung (41) besitzt, die durch dessen Innenseite in der Richtung parallel zu dem Wellenkern des rohrförmigen Halters (33) hindurchführt, und das andere Tellerventil (31) eine lüfterradförmige Auslaßdurchgangsöffnung (36) besitzt, die durch dessen Innenseite in der Richtung parallel zu dem Wellenkern an dem rohrförmigen Halter (33) hindurchführt, wobei eine lüfterradförmige Bypasskammer (37), die mit einer Einkerbung von der miteinander verbindenden Ebene mit dem Tellerventil (31) ausgestattet ist und eine Auslaßdurchgangsöffnung (38) besitzt.

3. Mischventil nach Anspruch 2, wobei die Auslaßdurchgangsöffnung (38) an der Umfangsseite des Tellerventils (31) festgelegt ist.

## Revendications

1. Soupape de mélange (20) qui évacue de l'eau mélangée, de manière que l'eau mélangée soit fournie sélectivement à une douche ou à un tube d'évacuation (48), ladite soupape de mélange (20) comprenant :
un carter de vanne (21) ayant un orifice d'entrée d'eau froide, un orifice d'entrée d'eau chaude, un orifice de sortie d'eau mélangée pour la douche et un orifice de sortie d'eau mélangée pour le tube d'évacuation (48);
une termosoupape (27) prévue à une extrémité dans ledit carter de vanne (21);
une soupape de changement d'écoulement (30) prévue à une autre extrémité dans ledit boîtier de vanne (21);
une poignée de changement (44) prévue à l'extérieur de l'autre extrémité dudit carter de vanne (21), reliée à la soupape de changement d'écoulement (30) de manière à actionner ladite soupape de changement d'écoulement (30);
une chambre de mélange (24) définie entre la termosoupape (27) et la soupape de changement d'écoulement (30) dans ledit carter de vanne (21);
dans laquelle de l'eau mélangée, qui a été mélangée dans la chambre de mélange (20), est fournie à l'orifice de sortie d'eau de mélange pour la douche ou à l'orifice de sortie d'eau mélangée pour le tube d'évacuation (48), sous l'action de ladite soupape de changement d'écoulement (30);
caractérisée en ce que
ledit carter de vanne (21) est tubulaire;
une termopoignée (28) est prévue à l'extérieur de la première extrémité dudit carter de vanne (21) et reliée à la termosoupape (27), de manière à actionner ladite termosoupape (27);
de l'eau froide provenant dudit orifice d'entrée d'eau froide et de l'eau chaude provenant dudit orifice d'entrée d'eau chaude étant fournies à la chambre de mélange (24) par l'intermédiaire de la termosoupape (27);
ladite soupape de changement d'écoulement (30) comprend un support tubulaire (33) inséré coaxialement dans ledit carter de vanne (21) tubulaire et deux soupapes en forme de disque (31, 32) agencées dans ledit support (33), de manière que :
lesdites soupapes en forme de disque (31, 32) se chevauchent de manière adaptable entre elles et les faces desdites soupapes en forme de disque (31, 32) sont perpendiculaires par rapport à la direction axiale du support (33),
l'une (32) desdites soupapes en forme de disque étant un disque déplaçable, qui est tourné par la poignée de changement (44), et l'autre (31) desdites soupapes en forme de disque étant un disque fixe, qui est monté immobile sur le support (33);
une chambre (25) reliée à la douche, introduite dans ledit orifice de sortie d'eau mélangée pour la douche, est prévue entre la périphérie extérieure dudit support (33) et la périphérie intérieure dudit carter de vanne (21); et en ce que
une autre chambre (26) reliée à une baignoire, introduite dans ledit orifice de sortie d'eau mélangée pour le tube d'évacuation (48), est prévue;
de manière que la liaison de la chambre de mélange (24) à la chambre (25) reliée à la douche ou à l'autre chambre (26) reliée à la baignoire soit effectuée en faisant tourner la soupape en forme de disque déplaçable (32).

2. Soupape de mélange selon la revendication 1, dans laquelle ladite première soupape en forme de disque (32) a un orifice d'entrée (41) qui la traverse dans la direction parallèle au noyau d'arbre du support tubulaire (33) et ladite autre soupape en forme de disque (31) a en son sein un orifice de sortie (36) en forme d'ailette, dans la direction parallèle au noyau d'arbre sur le support tubulaire (33), une chambre de dérivation (37) en forme d'ailette, agencée par simple adaptation avec ladite soupape en forme de disque (31) et un orifice de sortie (38).

3. Soupape de mélange selon la revendication 2, dans laquelle ledit orifice de sortie (38) est défini sur la face périphérique de la soupape en forme de disque (31).
